# EUROPEAN PATENT APPLICATION

(11) **EP 4 636 120 A1**
(43) Date of publication of application: **22.10.2025**
(21) Application number: 23903816.9
(22) Date of filing: 23.11.2023
(51) Int. Cl.: C23C 2/12, C23C 2/28, C23C 2/02, C22C 21/10, C22C 38/14, C22C 38/12, C22C 38/04, C22C 38/00

(54) **PLATED STEEL SHEET AND MANUFACTURING METHOD THEREFOR**

(30) Priority: 16.12.2022 KR 20220176757
(71) Applicant: POSCO Co., Ltd, Pohang-si, Gyeongsangbuk-do 37859 (KR)
(72) Inventor: LEE, Suk-Kyu, Gwangyang-si, Jeollanam-do 57807 (KR); CHO, Yong-Kyun, Seoul 06194 (KR)
(74) Representative: Meissner Bolte Partnerschaft mbB
(86) International application number: PCT/KR2023/019031
(87) International publication number: WO 2024/128613

(57) **Abstract**

The present invention relates to a plated steel plate and a manufacturing method therefor, and, more specifically, to a plated steel plate having excellent heat resistance and sacrificial protection, and a manufacturing method therefor.

## Description

### Technical Field

The present invention relates to a plated steel sheet and a manufacturing method therefor, and more specifically to a plated steel sheet having excellent heat resistance and sacrificial protection and a manufacturing method therefor.

### Background Art

Steel used in an exhaust system of automobiles should have heat resistance and corrosion resistance. When general galvanized steel sheets are applied, a melting point of a plating layer may be low, and thus, when high-temperature exhaust gas is discharged, there may be a problem in that the plating layer becomes alloyed and discolored. In addition, when aluminum plating is applied, this does not have sacrificial protection, and thus, when the plating layer is damaged during the driving of the automobiles, because corrosion may occur in the case of carbon steel, there is a problem that expensive stainless steel should be used.

In order to solve the above-described problems, Patent Document 1 suggests a manufacturing method by pressing zinc foil onto a surface of a cold-rolled steel sheet using a cladding method, and simultaneously pressing aluminum foil onto the zinc foil, and then passing the foil through an oven at a temperature of 300 to 400°C. However, although this method has the advantage of securing corrosion resistance and heat resistance, it is difficult to apply in practice because the fixing is complicated.

Patent Document 2 suggests an aluminum-plated steel sheet having excellent heat resistance and discoloration resistance by forming a plating layer containing Al and Si on carbon steel. In the technology, since the plating layer is formed of aluminum, there may be a problem in that although the plating layer has excellent surface corrosion resistance, this does not have sacrificial protection and thus may not effectively prevent corrosion of a base steel material.

Patent Document 3 suggests a ferritic stainless steel for an aluminum-plated steel sheet having excellent condensate corrosion resistance characteristics and high-temperature oxidation resistance due to the use of high-sulfur fuel. However, this also has a problem in that the costs may increase because relatively expensive stainless steel is used as the base steel material.

### [Prior art documents]

### [Patent Documents]

(Patent Document 1) Korean Patent No. 10-0580047
(Patent Document 2) Korean Patent No. 10-1197955
(Patent Document 3) Korean Patent No. 10-1485643

### Disclosure of Invention

### Technical Problem

An embodiment of the present invention is to provide a plated steel sheet and a manufacturing method therefor.

An embodiment of the present invention is to provide a plated steel sheet having excellent heat resistance and sacrificial protection and a manufacturing method therefor.

The aspect of the present invention is not limited to the above-described contents. Those skilled in the art will have no difficulty in understanding additional aspects of the present invention from the overall contents of this specification.

### Solution to Problem

According to an embodiment of the present invention, provided is a plated steel sheet including: a base steel sheet; and
a plating layer formed on the base steel sheet, and comprising, by wt%, Zn: 15 to 35%, Si: 5.0 to 15.0%, Fe: 1.0 to 7.0%, and a balance of Al and other impurities,
wherein other impurities in the plating layer are, by wt%, 5.0% or less, and
in the plating layer, a ratio of a Si content in a region from a surface to a 1/3 point of the plating layer in a thickness direction to the Si content in an entire plating layer region is 60 to 85%.

The base steel sheet may comprise, by wt%, C: 0.1% or less, Mn: 2.5% or less, Ti: 0.1% or less, Nb: 0.1% or less, Si: 1.5% or less, Al: 0.5% or less, P: 0.01% or less, S: 0.01% or less, and a balance of Fe and other inevitable impurities.

The plated steel sheet may have a whiteness difference (ΔL) of 5 or less before and after exposure at 500°C for 24 hours, and a cross-sectional red rust occurrence rate of 5% or less after salt spraying for 200 hours.

According to an embodiment of the present invention, provided is a manufacturing method for a plated steel sheet comprising: preparing a base steel sheet;
heat-treating the base steel sheet;
immersing and plating the heat-treated base steel sheet in a plating bath comprising, by wt%, Zn: 17 to 38%, Si: 7 to 18%, and a balance of Al and other impurities; and
cooling the plated steel sheet to a temperature range of 300°C or less at an average cooling rate of 10 to 50°C/s,
wherein the other impurities in the plating bath are, by wt%, 6.0% or less.

The base steel sheet may comprise, by wt%, C: 0.1% or less, Mn: 2.5% or less, Ti: 0.1% or less, Nb: 0.1% or less, Si: 1.5% or less, Al: 0.5% or less, P: 0.01% or less, S: 0.01% or less, and a balance of Fe and other inevitable impurities.

During the heat treatment, the base steel sheet may be maintained at a temperature range of 750 to 850°C for 50 to 500 seconds.

A temperature of the plating bath may be 40°C or higher than a melting point of a plating component system.

### Advantageous Effects of Invention

According to an embodiment of the present invention, a plated steel sheet and a manufacturing method therefor may be provided.

According to an embodiment of the present invention, a plated steel sheet having excellent heat resistance and sacrificial protection and a manufacturing method therefor may be provided.

According to an embodiment of the present invention, an aluminum-based plated steel sheet that may be used in an automobile exhaust system (muffler) and a manufacturing method therefor may be provided.

### Brief Description of Drawings

FIG. 1 illustrates a photograph of red rust occurrence of Inventive Example 5 according to an embodiment of the present invention.
FIG. 2 illustrates a photograph of Si distribution of Inventive Example 5 according to one embodiment of the present invention, which is captured using EPMA.
FIG. 3 illustrates a photograph of red rust occurrence of Comparative Example 7, which deviates from an embodiment of the present invention.
FIG. 4 illustrates a photograph of Si distribution of Comparative Example 7, which deviates from an embodiment of the present invention and is captured using EPMA.

### Best Mode for the Invention

Hereinafter, preferred embodiments of the present invention will be described. The embodiments of the present invention may be modified in various forms, and the scope of the present invention should not be construed as being limited to the embodiments described below. These embodiments are provided to explain the present invention in more detail to those skilled in the art to which the present invention belongs.

In the present invention, it may be possible to apply sacrificial protection and heat resistance, which conventional aluminum-plated steel sheets made of stainless steel do not have, to carbon steel, so that it was confirmed that a plated steel sheet having excellent heat resistance and sacrificial protection while being inexpensive may be provided, and the present invention was completed.

Hereinafter, the present invention will be described in detail.

A plated steel sheet according to an embodiment of the present invention may include a base steel sheet; and a plating layer formed on the base steel sheet.

Unless specifically stated otherwise in the present invention, % indicating the content of each element is based on weight.

### Base steel sheet

The present invention does not specifically limit the composition of the base steel sheet. However, the steel sheet according to one embodiment of the present invention may have, by wt%, a composition of C: 0.1% or less, Mn: 2.5% or less, Ti: 0.1% or less, Nb: 0.1% or less, Si: 1.5% or less, Al: 0.5% or less, P: 0.01% or less, and S: 0.01% or less.

A steel material of the present invention may include a balance of iron (Fe) and inevitable impurities in addition to the composition described above. Since inevitable impurities may be unintentionally incorporated during a normal manufacturing process, the impurities may not be excluded. Since these impurities are known to those skilled in the art of normal steel manufacturing, not all of their contents are specifically mentioned in this specification.

### Plating Layer

According to an embodiment of the present invention, the plating layer may include, by wt%, Zn: 15 to 35%, Si: 5.0 to 15.0%, Fe: 1.0 to 7.0%, and a balance of Al and other impurities, and the other impurities may be 5.0% or less.

When a Zn content of the plating layer exceeds 35%, there may be a problem that the plating adhesion is inferior. In an embodiment of the present invention, Zn may be included in an amount of 30% or less. On the other hand, when the Zn content is less than 15%, there may be a problem in that the sacrificial protection is not sufficiently secured. In an embodiment of the present invention, Zn may be included in an amount of 20% or more.

When plating Al, the addition of Si has the advantage of securing plating adhesion by suppressing excessive reaction between Al and Fe. When the Si content exceeds 15.0%, plating adhesion may be inferior. In an embodiment of the present invention, Si may be included in an amount of 120% or less. On the other hand, in order to effectively secure the above-described advantages, the content thereof may be limited to 5.0% or more. In an embodiment of the present invention, the content thereof may be included in an amount of 7.0% or more.

Fe is not artificially added during plating, but a Fe component of the base steel sheet may react with Al of the plating layer to form an Al-Fe alloy phase in a plating layer side direction at an interface between the plating layer and the base steel sheet. When the Fe content of the plating layer is less than 1.0%, the Al-Fe alloy phase may be insufficient, resulting in poor plating adhesion. On the other hand, when the content thereof exceeds 7.0%, the Al-Fe alloy phase is excessively formed, and there may be a problem of the plating layer peeling off during processing.

Other impurities may be included in an amount of 5.0% or less. Impurities may include Mg, Mn, and the like, and when the Mg content exceeds 5.0%, during plating, Mg oxide may be formed on a surface of a plating bath, which may cause surface defects, and there is a concern that discoloration may occur at high temperatures.

According to an embodiment of the present invention, a plating amount may be 20 to 200 g/m² based on one side.

According to an embodiment of the present invention, in the plating layer, a ratio of a Si content in a region from a surface to a 1/3 point of the plating layer in a thickness direction relative to the Si content in an entire plating layer region may be 60 to 85%.

The distribution of Si and Si compounds in the plating layer may have a significant effect on corrosion resistance, and specifically, as Si and Si compounds are distributed on a surface of the plated steel sheet, this is advantageous in securing corrosion resistance. In the present invention, the distribution of Si may be confirmed by analyzing a cross-section of the steel sheet using an Electron Probe Micro Analyzer (EPMA).

When a ratio of the Si content in the region from the surface to the 1/3 point of the plating layer in a thickness direction to the Si content in the entire plating layer region is less than 60%, it may be difficult to secure the desired corrosion resistance. On the other hand, when the ratio exceeds 85%, Si is excessively distributed on the surface, and the surface quality of the plating layer may be inferior.

Hereinafter, the manufacturing method for a steel sheet of the present invention will be described in detail.

A plated steel sheet according to an embodiment of the present invention may be manufactured by heat-treating, plating, and cooling a base steel sheet satisfying the alloy composition of the present invention.

### Preparation of Base Steel Sheet

A base steel sheet satisfying the alloy composition of the present invention may be prepared. The base steel sheet according to an embodiment of the present invention is not particularly limited in terms of alloy composition, but it is more preferable to satisfy the composition proposed in the present invention.

The composition of the base steel sheet may be applied in the same manner as described above.

### Heat Treatment

In the present invention, the heat treatment may be performed before plating. The heat treatment conditions are not particularly limited, but typical conditions that may be used in the same technical field may be applied. According to an embodiment of the present invention, the base steel sheet may be heat-treated at a temperature range of 750 to 850°C for 50 to 500 seconds.

### Plating

The heat-treated base steel sheet may be immersed and plated in a plating bath including, by wt%, Zn: 17 to 38%, Si: 7 to 18%, and a balance of Al and other impurities.

When the Zn content of the plating bath exceeds 38%, during plating, since a large amount of ash is generated in the plating bath, there may be problems such as reduced workability, such as dust generation. In addition, the Zn content of the plating layer intended for the present invention may be exceeded. In an embodiment of the present invention, Zn may be included in an amount of 37% or less. On the other hand, when the Zn content is less than 17%, the desired Zn content of the plating layer may not be secured, and there is a problem that sacrificial protection are not sufficiently secured. In an embodiment of the present invention, Zn may be included in an amount of 20% or more.

When plating Al, the addition of Si has the advantage of securing plating adhesion by suppressing excessive reaction between Al and Fe. When the Si content exceeds 18%, during plating, a melting point temperature of the plating bath increases, which may cause a problem of reducing the durability of the structure in the plating bath. In an embodiment of the present invention, Si may be included in an amount of 16% or less. On the other hand, in order to effectively secure the above-described advantages, the content may be limited to 7% or more. In one embodiment of the present invention, the content thereof may be included in an amount of 9% or more.

Fe is not artificially added to the plating bath, but the steel sheet may reacts with Al in the plating layer, and an Al-Fe alloy phase may be formed in a direction of the plating layer at an interface between the base steel sheet and the plating layer, and thus, Fe may be included in the plating layer. Meanwhile, during plating, the steel sheet may be immersed in the plating bath during the manufacturing process, and the Fe component of the steel sheet may be dissolved in the plating bath. That is, Fe is not intentionally added to the plating bath, but a certain amount thereof may inevitably be included.

Other impurities may be included in an amount of 6.0% or less. Impurities may include Mg, Mn, and the like, and when the Mg content exceeds 6.0%, Mg oxide may be formed on a surface of the plating bath during plating, which may cause surface defects, and there is a risk of discoloration at high temperatures.

According to an embodiment of the present invention, the plating amount may be 20 to 200 g/m² based on one side.

### Cooling

The plated steel sheet may be cooled at an average cooling rate of 10 to 50°C/s to a temperature range of 300°C or less.

In the present invention, as Si may be subject to enrichment on a surface of the plating layer, the cooling rate may be limited to form dense corrosion products during corrosion, thereby improving corrosion resistance. The lower the cooling rate, the more Si and Si compounds may move to the surface, but the distribution thereof may be limited in the present invention.

When the average cooling rate is less than 10°C/s, a Si enriched element may be formed inside the plating layer, which may promote galvanic corrosion within the plating layer, thereby reducing corrosion resistance. In addition, when the plating layer is not sufficiently cooled, a portion of the plating layer may be peeled off. On the other hand, when the cooling speed exceeds 50°C/s, the plating layer may be cooled significantly quickly, which may inhibit the movement of Si and Si oxides to the surface layer, resulting in a problem of deterioration in corrosion resistance.

In the present invention, the cooling end temperature may denote a temperature at which a top roll is reached. When the temperature of the steel sheet exceeds 300°C during cooling, until this reaches the top roll, there may be a problem of plating peeling off at the top roll.

The plating steel sheet of the present invention may secure excellent properties of heat resistance, sacrificial protection, and plating adhesion.

### Mode for Invention

Hereinafter, the present invention will be described more specifically through examples. However, it should be noted that the examples below are only intended to illustrate the present invention in more detail and are not intended to limit the scope of the rights of the present invention.

### (Example)

After heat-treating a base steel sheet having a composition of, by wt%, C: 0.01%, Mn: 0.5%, Ti: 0.01%, Nb: 0.01%, Si: 0.3%, Al: 0.045%, P: 0.01%, and S: 0.01%, the base steel sheet was plated under the conditions of Table 1 below, thus manufacturing a plated steel sheet. Here, a cooling temperature may specifically denote a top roll reached temperature. Meanwhile, as illustrated in the plating bath composition of Table 1, although Fe was not intentionally added to the plating bath, Fe of the steel sheet was dissolved and included in an amount of the corresponding weight% level as the steel sheet was immersed in the plating bath during a manufacturing process. Other compositions may include inevitable impurities excluding Zn, Si and Fe, and the balance includes Al.

In the present invention, as a heat treatment condition, after the heat treatment at a temperature of 800°C and for a time of 50 seconds in a furnace maintained in a reducing atmosphere, the steel sheet was immersed in a plating bath. An immersion temperature was maintained at the same as the temperature of the plating bath, and a temperature of the plating bath was maintained at a temperature uniformly increased by 40°C to a melting point of a plating component system. A plating amount was applied consistently at 60g/m₂ based on one side using air wiping.

**[Table]**

| Specimen Number | Plating bath composition (wt%) | | | | | Cooling | |
|---|---|---|---|---|---|---|---|
| | Zn | Si | Fe | Others | Al | Temperature (°C) | Rate (°C/s) |
| 1 | - | 1 | 1.5 | - | Balance | 265 | 20 |
| 2 | - | 21 | 1.5 | - | Balance | 265 | 20 |
| 3 | 16 | 1 | 1.5 | - | Balance | 265 | 20 |
| 4 | 16 | 21 | 1.5 | - | Balance | 265 | 20 |
| 5 | 48 | 1 | 1.5 | - | Balance | 265 | 20 |
| 6 | 48 | 21 | 1.5 | - | Balance | 265 | 20 |
| 7 | 36 | 1 | 1.5 | - | Balance | 265 | 20 |
| 8 | 18 | 7 | 1.5 | - | Balance | 265 | 20 |
| 9 | 18 | 7 | 1.5 | - | Balance | 265 | 20 |
| 10 | 24 | 9 | 1.5 | - | Balance | 265 | 20 |
| 11 | 24 | 9 | 1.5 | Mg: 3.2 | Balance | 265 | 20 |
| 12 | 30 | 13 | 1.5 | Mg: 0.7 | Balance | 265 | 20 |
| 13 | 30 | 13 | 1.5 | Mg: 5.5 | Balance | 265 | 20 |
| 14 | 36 | 7 | 1.5 | Mn: 0.6 | Balance | 265 | 20 |
| 15 | 42 | 7 | 1.5 | - | Balance | 265 | 20 |
| 16 | 42 | 20 | 1.5 | Mg: 2.2, Mn: 0.6 | Balance | 265 | 20 |
| 17 | 30 | 13 | 1.5 | Mg: 7.0 | Balance | 265 | 20 |
| 18 | 48 | 9 | 1.5 | - | Balance | 265 | 20 |
| 19 | 30 | 10 | 1.5 | - | Balance | 320 | 5 |
| 20 | 30 | 10 | 1.5 | - | Balance | 280 | 10 |
| 21 | 30 | 10 | 1.5 | Mg: 1. 3 | Balance | 250 | 30 |
| 22 | 30 | 10 | 1.5 | - | Balance | 220 | 50 |
| 23 | 30 | 10 | 1.5 | - | Balance | 200 | 60 |

A composition of the plating layer and a Si ratio were illustrated for the manufactured plated steel sheet. The composition of the plating layer was illustrated using Inductively Coupled Plasma (ICP), and the Si ratio was illustrated by analyzing a cross-section of the steel sheet using Electron Probe Micro Analyzer (EPMA) to show a ratio of Si and Si compounds. Here, a surface portion refers to a region from a surface of the plating layer to a 1/3 point of the plating layer in the thickness direction, and an interior thereof refers to the remaining region of the plating layer excluding the surface portion.

In addition, the physical properties were observed and illustrated for heat resistance, sacrificial protection, plating adhesion, and roll pickup. The measurement criteria and methods for each property are as follows.

O Heat resistance: A plated specimen was exposed to a 500°C oven for 24 hours, and a difference in whiteness (ΔL) before and after exposure was measured, and was evaluated according to the following criteria, and the whiteness was measured according to ISO 2469.
O: Δ is 5 or less
X: Δ is more than 5

O Sacrificial protection: After mounting the plated specimen to expose the cross-section, it was observed whether red rust occurs on a surface after a salt spray experiment for 200 hours. Here, the salt spray experiment is performed using a 35°C, 5% NaCl solution, and a degree of red rust occurrence may be observed with the naked eye.
O: Sectional red rust occurrence rate is 5% or less
X: Sectional red rust occurrence rate is more than 5%

O Plating adhesion: After the 0-t bending experiment, it was observed whether the plating layer is peeled off through a taping experiment. Here, the taping experiment was performed by bending and then straightening again the plating layer, attaching a tape to a bent portion, and then removing the tape again, thus observing whether the plating layer absorbed by the tape is present.
O: No plating layer peeling
X: Plating layer peeling

O Roll pickup: When the steel sheet from the plating bath passes through the top roll, it was observed whether the plating layer absorbed on the surface of the top roll is present.
O: No adsorption
X: Adsorption occurred

**[Table 2]**

| Speci men Numbe r | Plating Layer | | | | | | | Physical properties | | | | Divisi on |
|---|---|---|---|---|---|---|---|---|---|---|---|---|
| | Composition (wt%) | | | | | Si Ratio (%) | | Heat Resis tance | sacri ficial prote ction | plati ng adhes ion | Roll Pick up | |
| | Zn | Si | Fe | Othe rs | Al | Surfa ce Porti on | Inter ior | | | | | |
| 1 | - | 0.5 | 8.0 | - | Balance | 38 | 62 | O | X | X | O | Compar ative Exampl e 1 |
| 2 | - | 16.0 | 0.5 | - | Balance | 87 | 13 | ○ | X | X | O | Compar ative Example 2 |
| 3 | 13 | 0.5 | 8.0 | - | Balance | 38 | 62 | O | X | X | O | Compar ative Exampl e 3 |
| 4 | 13 | 16.0 | 0.5 | - | Balance | 87 | 13 | O | X | X | O | Compar ative Exampl e 4 |
| 5 | 40 | 0.5 | 8.0 | - | Balance | 38 | 62 | X | O | X | O | Compar ative Exampl e 5 |
| 6 | 40 | 16.0 | 0.5 | - | Balance | 87 | 13 | X | O | X | O | Compar ative Exampl e 6 |
| 7 | 30 | 0.5 | 7.0 | - | Balance | 37 | 63 | O | X | X | O | Compar ative Exampl e 7 |
| 8 | 15 | 5.0 | 7.0 | - | Balance | 60 | 40 | O | O | O | O | Invent ive Exampl e 1 |
| 9 | 15 | 5.0 | 7.0 | - | Balance | 60 | 40 | O | O | O | O | Invent ive Exampl e 2 |
| 10 | 20 | 7.0 | 3.0 | - | Balance | 65 | 35 | O | O | O | O | Invent ive Exampl e 3 |
| 11 | 20 | 7.0 | 3.0 | Mg: 3.0 | Balance | 65 | 35 | O | O | O | O | Invent ive Exampl e 4 |
| 12 | 25 | 10.0 | 4.0 | Mg: 0.5 | Balance | 72 | 28 | O | O | O | O | Invent ive Exampl e 5 |
| 13 | 25 | 10.0 | 4.0 | Mg: 5.0 | Balance | 72 | 28 | O | O | O | O | Invent ive Exampl e 6 |
| 14 | 30 | 5.0 | 3.0 | Mn: 0.5 | Balance | 60 | 40 | O | O | O | O | Invent ive Exampl e 7 |
| 15 | 38 | 4.0 | 5.0 | - | Balance | 60 | 40 | X | O | X | O | Compar ative Exampl e 8 |
| 16 | 37 | 16.0 | 1.0 | Mg: 2.0, Mn: 0.5 | Balance | 84 | 16 | X | O | X | O | Compar ative Exampl e 9 |
| 17 | 25 | 10.0 | 4.0 | Mg: 7.0 | Balance | 72 | 28 | X | O | O | O | Compar ative Exampl e 10 |
| 18 | 40 | 7.0 | 3.0 | - | Balance | 65 | 35 | X | O | O | O | Compar ative Exampl e 11 |
| 19 | 25 | 8.0 | 3.0 | - | Balance | 91 | 9 | O | O | O | X | Compar ative Exampl e 12 |
| 20 | 25 | 8.0 | 3.0 | - | Balance | 83 | 17 | O | O | O | O | Invent ive Exampl e 10 |
| 21 | 25 | 8.0 | 3.0 | Mg: 1.0 | Balance | 74 | 26 | O | O | O | O | Invent ive Exampl e 11 |
| 22 | 25 | 8.0 | 3.0 | - | Balance | 62 | 38 | O | O | O | O | Invent ive Exampl e 12 |
| 23 | 25 | 8.0 | 3.0 | - | Balance | 40 | 60 | O | X | O | O | Compar ative Exampl e 13 |

As illustrated in Table 1, in the case of the Inventive Examples satisfying the conditions of the present invention, it was confirmed that all the properties desired by the present invention may be secured.

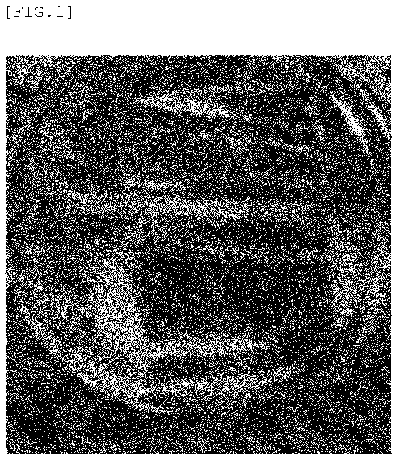

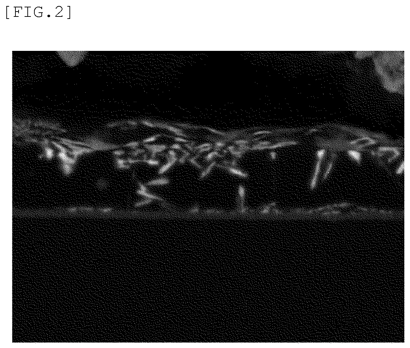

FIG. 1 illustrates a photograph of red rust occurrence of Inventive Example 5 according to an embodiment of the present invention. As illustrated in FIG. 1, during the experiment to determine whether red rust occurred, it was confirmed that no red rust occurred. FIG. 2 illustrates a photograph of the Si distribution of Inventive Example 5 according to an embodiment of the present invention, which is captured by EPMA. As illustrated in FIG. 2, it may be confirmed that a large amount of Si distribution was observed on the surface portion of the plating layer.

On the other hand, Comparative Examples 1 to 11 are examples that do not satisfy the plating bath composition proposed by the present invention. During the plating, the plating bath composition did not satisfy all the ranges proposed by the present invention, and thus, when manufacturing the plated steel sheet, the composition of the plating layer deviated from the range of the present invention. As a result, all the properties desired by the present invention may not be secured.

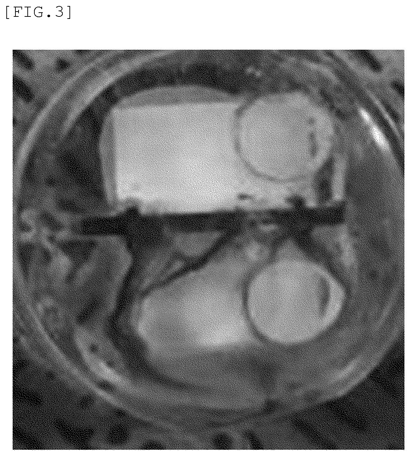

FIG. 3 shows a photograph of red rust occurrence of Comparative Example 7, which deviates from an embodiment of the present invention. As illustrated in FIG. 3, it may be confirmed that red rust occurred.

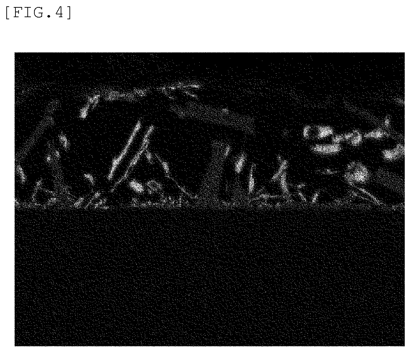

FIG. 4 illustrates a photograph of Si distribution of Comparative Example 7, which deviates from an embodiment of the present invention, and is captured by EPMA. As illustrated in FIG. 4, it may be confirmed that the Si distribution exists more on the inside than on the surface portion of the plating layer.

Comparative Examples 12 and 13 are examples in which a cooling rate after the plating deviates from the range proposed by the present invention. In Comparative Example 12, the cooling rate was insufficient, and thus, Si diffusion into the surface of the steel sheet was excessive, and as a result, there was a problem in that the plating layer was absorbed when passing through the top roll. In Comparative Example 13, the cooling rate was excessive, and thus, Si diffusion on the surface was insufficient. As a result, the sacrificial protection was inferior.

Although the present invention has been described in detail through examples, other forms of examples are also possible. Therefore, the technical spirit and scope of the claims described below are not limited to the embodiments.

## Claims

1. A plated steel sheet, comprising:
a base steel sheet; and
a plating layer formed on the base steel sheet, and comprising, by wt%, Zn: 15 to 35%, Si: 5.0 to 15.0%, Fe: 1.0 to 7.0%, and a balance of Al and other impurities,
wherein other impurities in the plating layer are, by wt%, 5.0% or less, and
in the plating layer, a ratio of a Si content in a region from a surface to a 1/3 point of the plating layer in a thickness direction to the Si content in an entire plating layer region is 60 to 85%.

2. The plated steel sheet of claim 1, wherein the base steel sheet comprises, by wt%, C: 0.1% or less, Mn: 2.5% or less, Ti: 0.1% or less, Nb: 0.1% or less, Si: 1.5% or less, Al: 0.5% or less, P: 0.01% or less, S: 0.01% or less, and a balance of Fe and other inevitable impurities.

3. The plated steel sheet of claim 1, wherein the plated steel sheet has a whiteness difference (ΔL) of 5 or less before and after exposure at 500°C for 24 hours, and a cross-sectional red rust occurrence rate of 5% or less after salt spraying for 200 hours.

4. A manufacturing method for a plated steel sheet, comprising:
preparing a base steel sheet;
heat-treating the base steel sheet;
immersing and plating the heat-treated base steel sheet in a plating bath including, by wt%, Zn: 17 to 38%, Si: 7 to 18%, and a balance of Al and other impurities; and
cooling the plated steel sheet to a temperature range of 300°C or less at an average cooling rate of 10 to 50°C/s,
wherein the other impurities in the plating bath are, by wt%, 6.0% or less.

5. The manufacturing method for a plated steel sheet of claim 4, wherein the base steel sheet comprises, by wt%, C: 0.1% or less, Mn: 2.5% or less, Ti: 0.1% or less, Nb: 0.1% or less, Si: 1.5% or less, Al: 0.5% or less, P: 0.01% or less, S: 0.01% or less, and a balance of Fe and other inevitable impurities.

6. The manufacturing method for a plated steel sheet of claim 4, wherein during the heat treatment, the base steel sheet is maintained at a temperature range of 750 to 850°C for 50 to 500 seconds.

7. The manufacturing method for a plated steel sheet of claim 4, wherein a temperature of the plating bath is 40°C or higher than a melting point of a plating component system.
